Europäisches Patentamt

**European Patent Office**

Office européen des brevets

(19)

(11) Publication number: **0 186 282**
**B1**

## EUROPEAN PATENT SPECIFICATION

(12)

(45) Date of publication of patent specification: **27.07.88**

(51) Int. Cl.⁴: **E 05 F 15/16, H 02 P 7/00**

(21) Application number: **85307775.8**

(22) Date of filing: **28.10.85**

(54) Apparatus for driving a vehicle window.

(30) Priority: **26.11.84 US 674688**

(43) Date of publication of application:
**02.07.86 Bulletin 86/27**

(45) Publication of the grant of the patent:
**27.07.88 Bulletin 88/30**

(84) Designated Contracting States:
**DE FR GB IT**

(56) References cited:
**EP-A-0 038 214**
**US-A-4 146 826**
**US-A-4 454 454**
**US-A-4 476 416**

(73) Proprietor: **GENERAL MOTORS CORPORATION**
**General Motors Building 3044 West Grand Boulevard**
**Detroit Michigan 48202 (US)**

(72) Inventor: **Lehnhoff, Richard Nicholas**
**2616 Baylor Court**
**Kettering OH 45420 (US)**

(74) Representative: **Denton, Michael John et al**
**Patent Section - Luton Office (F6) Vauxhall Motors Limited P.O. Box 3 Kimpton Road Luton Bedfordshire LU2 0SY (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

This invention relates to apparatus for driving a vehicle window in one or the other of two directions. The apparatus is a one-touch control, in which a single touch of a first switch initiates window movement and such movement continues until the motor stalls due to end of travel or an obstruction or until a second switch is touched.

Few such controls exist in the prior art; and those that do are generally complex in circuitry. One such arrangement is described in US-A-4,476,416. The arrangement described is a one touch power window control; whether or not the window moves all the way to the stop or remains under operator control depends on the duration of actuation of the control switch. The arrangement is a one touch on-one touch off system for full movement of the window. However the control switch must be continually actuated to move the window to a position between full open or closed.

The present invention is concerned with providing apparatus for driving a vehicle window which is a minimum component, low cost arrangement and which provides a one touch stop as well as a one touch start.

To this end apparatus for driving a vehicle window in accordance with the present invention is characterised by the features specified in the characterising portion of Claim 1.

The control of this invention uses circuitry with significantly fewer elements for simpler construction and reduced cost. Although, in one sense, separate switches and circuits are provided to control window movement in each direction, several elements in each circuit perform dual functions for a reduced part count. One of the functions performed by these elements is the prevention of a short circuit across the power supply through the semiconductor switching elements of a motor controlling H-switch bridge.

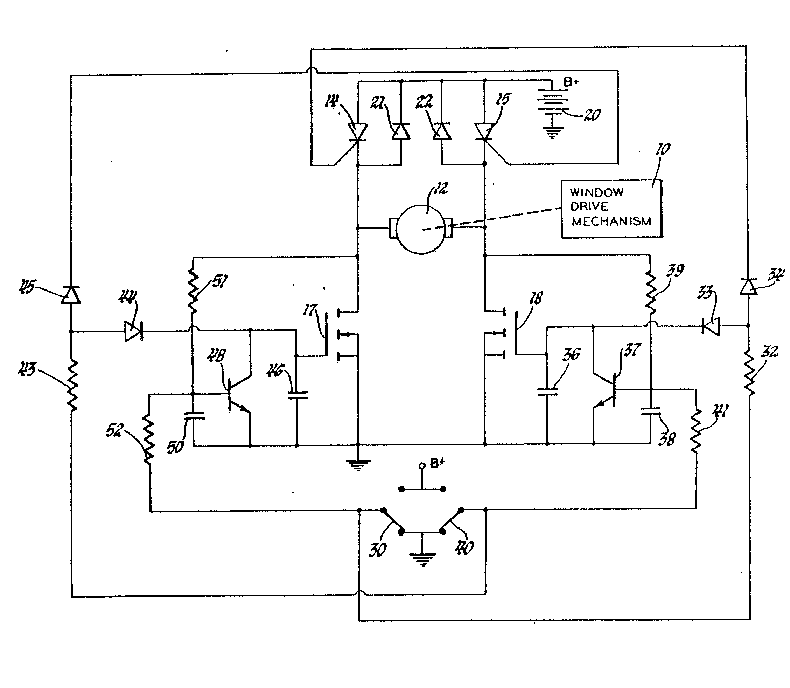

This invention is further described, by way of example, with reference to the accompanying drawing in which the sole Figure is a circuit of a preferred embodiment of apparatus for driving a vehicle window in accordance with the invention.

Referring to the sole Figure, a window drive mechanism 10 of conventional construction is provided to raise and lower a vehicle window between full closed and full open positions when driven by a reversible DC motor 12, which may have a permanent magnet or wound field. The permanent magnet field is preferred; and the connections shown in the Figure are those of the armature terminals. In the case of a wound field motor, field power connections are standard in the art and are therefore not shown.

Reversible DC motor 12 is connected with its armature terminals in an H-switch bridge arrangement with a pair of silicon controlled rectifiers (SCR) 14, 15 and a pair of field effect transistors (FET) 17, 18. The SCRs 14, 15 both have anodes connected to the B+ side of an electric power source 20, which is shown as a battery but generally includes the vehicle alternator and voltage regulator as well. The cathodes of the SCRs 14, 15 are connected, respectively, to the two armature terminals of the reversible DC motor 12; and these armature terminals are also connected, respectively, to the drains of the FETs 17, 18. The sources of the FETs 17, 18 are both connected to ground. The actuation of the reversible DC motor 12 is typical for such arrangements in that the actuation of the SCR 14 and the FET 18 causes current flow in one direction through the armature of the reversible DC motor 12 to produce motor rotation in a first direction to drive the window upward toward its closed position, whereas the actuation of the SCR 15 and the FET 17 causes current flow and motor rotation in the opposite direction to drive the window downward toward it full open position. The SCRs 14, 15 are provided with reverse bypass diodes 21 and 22 to allow inductive load switching of the armature of the reversible DC motor 12 in the usual manner.

A first switch 30 includes an armature switchable between a first position in which it is grounded and a second position in which it is connected to power supply B+. The first switch 30 is mechanically biased into the first position. The armature of the first switch 30 is connected at all times through a resistor 32 (390 ohms) and a diode 33 to the gate of the FET 18. It is further connected through the resistor 32 and a diode 34 to the gate of the SCR 14. The gate of the FET 18 is connected to ground through a capacitor 36 (0.1µF) and also through the collector-to-emitter path of an NPN, bipolar transistor 37 having a base connected to ground through a capacitor 38 (22µF) and further connected through a resistor 39 (10K) to the drain of the FET 18.

A second switch 40 has an armature biased into a first position in which it is grounded but actuable to a second position in which it contacts the power supply B+. The armature of the second switch 40 is connected through a resistor 41 (10K) to the base of the NPN bipolar transistor 37, through a resistor 43 and a diode 44 to the gate of the FET 17 and through the resistor 43 and a diode 45 to the gate of the SCR 15. The gate of the FET 17 is further connected through a capacitor 46 to ground and the collector-to-emitter current path of an NPN transistor 48 to ground. The base of the NPN transistor 48 is connected through a capacitor 50 to ground, through a resistor 51 to the drain of the FET 17 and through a resistor 52 (10K) to the armature of the first switch 30. Component values for elements 43-52 are identical to those for the analogous elements 32-41 on the other side of the Figure.

In order to initiate upward movement of the window drive mechanism 10, the first switch 30, which is normally in its grounded position as shown in the Figure, is momentarily closed to contact power supply B+. This produces high voltages through the resistor 32 and the diodes 33, 34 on the gates of the SCR 14 and the FET 18 to initiate current flow through the armature of the reversible DC motor 12 and drive the window drive mechanism 10 in the upward direction. It further results in a quick charging of the capacitor 36 through the resistor 32 to maintain the high voltage on the gate of the FET 18 as the first switch 30 is normally immediately returned to its grounded position. The diodes 33 and 34 block any reverse current flow back through the resistor 32 and the first switch 30 when the first switch 30 is grounded to prevent the turnoff of either the SCR 14 or the FET 18 by such grounding.

The closure of the first switch 30 to the B+ power supply further provides current flow through the resistor 52 to charge the capacitor 50 and turn on the NPN transistor 48. This ensures that the capacitor 46 is discharged and the FET 17 is thus held off to prevent a short circuit across the power supply through the SCR 14, which is now activated, and the FET 17. Once the SCR 14 begins conduction, some of its current is available through the resistor 51 to maintain the charge on the capacitor 50 and drive the NPN transistor 48 to hold the FET 17 off after the first switch 30 is returned to its ground position.

Since the SCRs 14, 15, once actuated, remain conducting until the current therethrough is stopped, the SCR 14 remains in a conducting condition until the current through the armature of the reversible DC motor 12 is stopped by the turnoff of the FET 18; and the FET 18 can be turned off only by the actuation of the NPN bipolar transistor 37 to discharge the capacitor 36. In addition, as long as the current flow through the armature of the reversible DC motor 12 is at a reasonably low level indicating the absence of stall, the source-to-drain voltage across the FET 18 is also low, since the voltage across an FET varies with the current therethrough. The resistors 39 and 41 form a voltage divider across the FET 18 with values chosen to keep the NPN bipolar transistor 37 turned off under these conditions.

The NPN bipolar transistor 37 can be turned on to turn off the FET 18 and stop the reversible DC motor 12 in either of two ways. The first way is automatic, in that when the window reaches its travel limit or otherwise encounters an obstacle in its upward movement, the current through the armature of the reversible DC motor 12 rises significantly in a stall condition and thus increases the source-to-drain voltage of the FET 18. The voltage on the base of the NPN bipolar transistor 37 rises proportionally with this increase and initiates the conduction of the NPN bipolar transistor 37 to discharge the capacitor 36 and turn off the FET 18. The armature current of the reversible DC motor 12 thus decreases quickly, with the reverse bypass diode 22 absorbing the excess current until it decreases sufficiently to turn off the SCR 14.

The operator may also cause the actuation of the NPN bipolar transistor 37 to stop window movement by closing the second switch 40 so that its armature contacts power supply B+. This provides current directly from the B+ power supply through the resistor 41 to charge the capacitor 38 and actuate the NPN bipolar transistor 37 so that the capacitor 36 is discharged to turn off the FET 18 and the SCR 14 as described above. The capacitor 38 maintains its charge, with the consequent holding off of the FET 18, as long as necessary to ensure the turn off of the SCR 14, since current from the SCR 14 through the armature of the reversible DC motor 12 helps maintain the charge on the capacitor 38 as long as it flows. In addition, since both FETs 17,18 are held off during this phase of operation, the SCR 15 is not permitted to turn on, even though the closing of the second switch 40 provides a conduction enabling voltage on its gate. When all current stops in the SCR 14, assuming the second switch 40 has been released, both SCRs 14, 15 and both FETs 17,18 will be in non-conducting states; and the circuit will be inactive, with the window remaining in the position selected by the operator. It should be noted that, if the second switch 40 is still closed to the B+ power supply when the SCR 14 stops conducting, the FET 17 and the SCR 15 will be enabled to begin actuation of the reversible DC motor 12 in the opposite direction for downward movement. Thus a short closure of the second switch 40 while the window is moving upward will stop the window; but continued closure of the second switch will eventually cause reversal of window movement. It should also be noted that, once upward movement of the window is stopped by means of the closure of the second switch 40, it may be reinitiated in the upward direction by the momentary closure of the first switch 30 once again.

The operation of the circuit for downward movement will not be described in detail, since it is similar to that for upward movement using the analogous circuit elements on the other side of the Figure with the role of the first and second switches 30 and 40 respectively reversed to control the actuation of the SCR 15 and the FET 17.

The circuit as described is a compact and efficient circuit for providing one-touch power window control, since many elements in it provide dual functions in different situations. For example, the first and second switches 30 and 40 respectively each serve to initiate window movement in one direction when the window is still and to stop window movement when that movement is in the other direction. In addition, the resistor 51 serves, when the window is moving upward with the SCR 14 conducting and the FET 17 not conducting, to conduct current from the SCR 14 to the capacitor 50 and the base of the NPN transistor 48 to prevent the FET 17 from conducting if the second switch 40 is actuated to stop the window. However, when the window is moving downward with the FET 17 conducting and the SCR 14 not conducting, the resistor 51 is part of a voltage divider with the resistor 52 to automatically actuate the NPN transistor 48 and thus stop the window when motor stall current through the FET 17 causes the voltage threreacross to increase. Of course, analogous statements can be made concerning the resistor 39 on the other side. Further, the resistor 52 comprises part of the voltage divider mentioned above while the FET 17 is conducting but provides the signal conduit from the first switch 30 to the NPN transistor 48 to hold the FET 17 off when up window movement isinitiated. Finally, the circuit always provides protection against short circuit of the power supply through an SCR and an FET.

## Claims

1. Apparatus for driving a vehicle window comprising a source (20) of electric power having first and second terminals; an electric motor (12) having first and second terminals; a first semiconductor switch (14); a second semiconductor switch (15); a third semiconductor switch (17); a fourth semiconductor switch (18), the third and fourth semiconductor switch es having actuating gates and the characteristics that a voltage thereacross increases with current therethrough; a first actuating switch (30); a second actuating switch (40); a first capacitor (46); a second capacitor (36); a first discharge transistor (48); a second discharge transistor (37), the first and second discharge transistors having bases; a first impedance (52); a second impedance (41); a third capacitor (50); a fourth capacitor (38); a third impedance (51); and a fourth impedance (39); the apparatus being characterised by the first and second semiconductor switches (14, 15) connecting the first terminal of the source (20) of electric power to the first and second terminals of the electric motor (12), respectively, the first and second semiconductor switches each having an actuating gate effective to latch the switch in a conducting condition until current therethrough is stopped; the third and fourth semiconductor switches (17, 18) being connected in series between the first and second terminals, respectively, of the electric motor and the second terminal of the source of electric power; the first and second actuating switches (30, 40) being momentarily activatable to communicate, respectively, the actuating gates of the first and fourth semiconductor switches (14, 18) and the actuating gates of the second and third semiconductor switches (15, 17) with the first terminal of the source of electric power; the first and second capacitors (46, 36) being connected from the actuating gates of the third and fourth semiconductor switches, respectively, to the second terminal of the source of electric power; the first and second discharge transistors (48, 37) being connected across the first and second capacitors, respectively; the first impedance (52) being connected in series between the first actuating switch and the base of the first discharge transistor, the first actuating switch normally communicating the base of the first discharge transistor through the first impedance to the second terminal of the source of electric power but being momentarily activatable to communicate the base of the first discharge transistor through the first impedance to the first terminal of the source of electric power; the second impedance (41) being connected in series between the second actuating switch and the base of the second discharge transistor, the second actuating switch normally communicating the base of the second discharge transistor through the second impedance to the second terminal of the source of electric power but being momentarily activatable to communicate the base of the second discharge transistor through the second impedance to the first terminal of the source of electric power; the third and fourth capacitors (50, 38) connecting the bases of the first and second discharge transistors, respectively, to the second terminal of the source of electric power; the third impedance (51) connecting the base of the first discharge transistor to the first terminal of the electric motor, the first and third impedances forming a voltage divider effective to hold the first discharge transistor in a non-conducting state until the current through the third semiconductor switch increases due to stalling of the electric motor or the - first actuating switch is activated; and the fourth impedance (39) connecting the base of the second discharge transistor to the second terminal of the electric motor, the second and fourth impedances forming a voltage divider effective to hold the second discharge transistor in a non-conducting state until the current through the fourth semiconductor switch increases due to stalling of the electric motor or the second actuating switch is activated.

2. Apparatus as claimed in Claim 1, characterised in that the first and second semiconductor switches (14, 15) are silicon controlled rectifiers and the third and fourth semiconductor switches (17, 18) are field effect transistors, the silicon controlled rectifiers and the field effect transistors forming a bridge circuit, the third and fourth impedances (51, 39) connecting the cathodes of the first and second silicon controlled rectifiers to the bases of the first and second discharge transistors, respectively.

3. Apparatus as claimed in Claim 1 or Claim 2, characterised in that the first actuating switch (30) is connected through a fifth impedance (32) and first unidirectional current means (33, 34) to the actuating gates of the first and fourth semiconductor switches; and in that the second actuating switch (40) is connected through a sixth impedance (43) and second unidirectional current means (44, 45) to the actuating gates of the second and third semiconductor switches; the first and second actuating switches being biased into first states in which their armature terminals communicate with the second terminal of the source (20) of electric power but being selectively activatable into second states in which their armature terminals communicate with the first terminal of the source of eletric power.

## Patentansprüche

1. Vorrichtung zum Antreiben eines Fahrzeugfensters mit einer Quelle (20) für elektrische Leistung mit ersten und zweiten Klemmen, einem Elektromotor (12) mit ersten und zweiten Klemmen, einem ersten Halbleiterschalter (14), einem zweiten Halbleiterschalter (15), einem dritten Halbleiterschalter (17), einem vierten Halbleiterschalter (18), wobei der dritte und der vierte Halbleiterschalter Betätigungstore besitzen und die Eigenschaft aufweisen, daß eine darüber herrschende Spannung mit dem durchfließenden Strom ansteigt, einem ersten Betätigungsschalter (30), einem zweiten Betätigungsschalter (40), einem ersten Kondensator (46), einem zweiten Kondensator (36), einem ersten Entladungstransistor (48), einem zweiten Entladungstransistor (37), wobei der erste und der zweite Entladungstransistor je eine Basiselektrode besitzt, einer ersten Impedanz (52), einer zweiten Impedanz (41), einem dritten Kondensator (50), einem vierten Kondensator (38), einer dritten Impedanz (51) und einer vierten Impedanz (39), wobei die Vorrichtung dadurch gekennzeichnet ist, daß der erste und der zweite Halbleiterschalter (14, 15) die erste Klemme der elektrischen Leistungsquelle (20) mit der ersten bzw. der zweiten Klemme des Elektromotors (12) verbinden, daß der erste und der zweite Halbleiterschalter jeweils ein Betätigungstor besitzt, das zum Verriegeln des Schalters in einem Leitzustand wirksam ist, bis der durchgehende Strom gestoppt wird, daß der dritte und der vierte Halbleiterschalter (17, 18) in Reihe zwischen der ersten bzw. zweiten Klemme des Elektromotors und der zweiten Klemme der elektrischen Leistungsquelle liegen, daß der erste und der zweite Betätigungsschalter (30, 40) momentan aktivierbar sind, um jeweils die Betätigungstore der ersten und vierten Halbleiterschalter (14, 18) bzw. die Betätigungstore der zweiten und dritten Halbleiterschalter (15, 17) mit der ersten Klemme der elektrischen Leistungsquelle zu verbinden, daß der erste und der zweite Kondensator (46, 36) von dem Betätigungstor des dritten bzw. vierten Halbleiterschalters zu der zweiten Klemme der elektrischen Leistungsquelle verbunden sind, daß der erste und der zweite Entladungstransistor (48, 37) jeweils parallel zu dem ersten bzw. zweiten Kondensator geschaltet ist, daß die erste Impedanz (52) in Reihe zwischen dem ersten Betätigungsschalter und der Basis des ersten Entladungstransistors geschaltet ist, daß der erste Betätigungsschalter normalerweise die Basis des ersten Entladungstransistors durch die erste Impedanz mit der zweiten Klemme der elektrischen Leistungsquelle verbindet, jedoch momentan aktivierbar ist, um die Basis des ersten Entladungstransistor durch die erste Impedanz mit der ersten Klemme der elektrischen Leistungsquelle zu verbinden, daß die zweite Impedanz (41) in Reihe zwischen den zweiten Betätigungsschalter und der Basis des zweiten Entladungstransistors geschaltet ist, daß der zweite Betätigungsschalter normalerweise die Basis des zweiten Entladungstransistors durch die zweite Impedanz mit der zweiten Klemme der elektrischen Leistungsquelle verbindet, jedoch momentan aktivierbar ist, um die Basis des zweiten Entladungstransistors durch die zweite Impedanz mit der ersten Klemme der elektrischen Leistungsquelle zu verbinden, daß der dritte und der vierte Kondensator (50, 38) jeweils die Basis des ersten bzw. des zweiten Entladungstransistors mit der zweiten Klemme der elektrischen Leistungsquelle verbindet, daß die dritte Impedanz (51) die Basis des ersten Entladungstransistors mit der ersten Klemme des Elektromotors verbindet, daß die erste und die dritte Impedanz einen Spannungsteiler bilden, der ein Halten des ersten Ladungstransistors im nichtleitenden Zustand bewirkt, bis der Strom durch den dritten Halbleiterschalter infolge des Festwürgens des Elektromotors oder der Beaufschlagung des ersten Betätigungsschalters ansteigt, und daß die vierte Impedanz (39) die Basis des zweiten Entladungstransistors mit der zweiten Klemme des Elektromotors verbindet, daß die zweite und die vierte Impedanz einen Spannungsteiler bilden, der ein Halten des zweiten Entladungstransistors im leitenden Zustand bewirkt, bis der Strom durch den vierten Halbleiterschalter infolge des Festwürgens des Elektromotors oder der Beaufschlagung des zweiten Betätigungsschalters ansteigt.

2. Vorrichtung nach Anspruch 1, dadurch gekennzeichnet, daß der erste und der zweite Halbleiterschalter (14, 15) gesteuerte Siliziumgleichrichter und der dritte und der vierte Halbleiterschalter (17, 18) Feldeffekttransistoren sind, daß die gesteuerten Siliziumgleichrichter und die Feldeffekttransistoren eine Brückenschaltung bilden und daß die dritte und die vierte Impedanz (51, 39) die Kathode des ersten bzw. des zweiten gesteuerten Siliziumgleichrichters mit der Basis des ersten bzw. des zweiten Entladungstransistors verbindet.

3. Vorrichtung nach Anspruch 1 oder 2, dadurch gekennzeichnet, daß der erste Betätigungsschalter (30) über eine fünfte Impedanz (32) und erste Ein-Richtungs-Stromleitmittel (33, 34) mit den Betätigungstoren des ersten bzw. vierten Halbleiterschalters verbunden ist und daß der zweite Betätigungsschalter (40) über eine sechste Impedanz (43) und zweite Ein-Richtungs-Stromleitmittel (44, 45) mit den Betätigungstoren des zweiten bzw. dritten Halbleiterschalters verbunden ist, daß der erste und der zweite Betätigungsschalter in erste Zustände vorgespannt sind, in welchen ihre Ankerklemmen mit der zweiten Klemme der elektrischen Leistungsquelle (20) in Verbindung sind, jedoch wahlweise in zweite Zustände aktivierbar sind, in welchen ihre Ankerklemmen mit der ersten Klemme der elektrischen Leistungsquelle in Verbindung sind.

**Revendications**

1. Appareil d'entraînement d'un vitrage de fenêtre de véhicule, comprenant une source d'énergie électrique (20) ayant une première et une seconde bornes, un moteur électrique (12) ayant une première et une seconde borne, un premier commutateur à semi-conducteur (14), un second commutateur à semi-conducteur (15), un troisième commutateur à semi-conducteur (17), un quatrième commutateur à semiconducteur (18), le troisième et le quatrième commutateur à semi-conducteur ayant des "grilles" de commande et des caractéristiques telles qu'une tension à leurs bornes augmente lorsque le courant qui y circule croît, un premier commutateur de manoeuvre (30), un second commutateur de manoeuvre (40), un premier condensateur (46), un second condensateur (36), un premier transistor de décharge (48), un second transistor de décharge (37), le premier et le second transistor de décharge ayant des bases, une première impédance (52), une seconde impédance (41), un troisième condensateur (50), un quatrième condensateur (38), une troisième impédance (51) et une quatrième impédance (39) où cet appareil est caractérisé en ce que le premier et le second commutateur à semi-conducteur (14, 15) relient la première borne de la source (20) à la première et à la seconde borne du moteur électrique (12) respectivement, le premier et le second commutateur à semi-conducteur ont chacun une "gâchette" de commande assurant efficacement le maintien du commutateur à l'état conducteur jusqu'à l'arrêt de la circulation d'un courant, le troisième et le quatrième commutateur à semi-conducteur (17, 18) sont montés en série entre la première et la seconde borne respectivement du moteur électrique et la seconde borne de la source, le premier et le second commutateur de manoeuvre (30, 40) peuvent être manoeuvrés temporairement afin qu'ils fassent communiquer respectivement la "gâchette" du premier commutateur à semi-conducteur et la "grille" du quatrième commutateur à semi-conducteur (14, 18), et la "gâchette" du second commutateur à semi-conducteur et la "grille" du troisième commutateur à semi-conducteur (15, 17) avec la première borne de la source, le premier et le second condensateur (46, 36) sont connectés entre la grille de commande du troisième ou du quatrième commutateur à semiconducteur respectivement et la seconde borne de la source, le premier et le second transistor de décharge (48, 37) sont connectés aux bornes du premier et du second condensateur respectivement, la première impédance (52) est montée en série entre le premier commutateur de manoeuvre et la base du premier transistor de décharge, le premier commutateur de manoeuvre faisant normalement communiquer la base du premier transistor de décharge, par l'intermédiaire de la première impédance, avec la seconde borne de la source mais pouvant être commandé temporairement afin qu'il mette en communication la base du premier transistor de décharge, par l'intermédiaire de la première impédance, avec la première borne de la source, la seconde impédance (41) est montée en série entre le second commutateur de manoeuvre et la base du second transistor de décharge, le second commutateur de manoeuvre faisant normalement communiquer la base du second transistor de décharge, par l'intermédiaire de la seconde impédance, avec la seconde borne de la source, mais pouvant être commandé temporairement afin qu'il fasse communiquer la base du second transistor de décharge, par l'intermédiaire de la seconde impédance, avec la première borne de la source, le troisième et le quatrième condensateur (50, 38) relient les bases du premier et du second transistor de décharge, respectivement, à la seconde borne de la source, la troisième impédance (51) relie la base du premier transistor de·décharge à la première borne du moteur électrique, la première et la troisième impédance formant un circuit diviseur de tension assurant le maintien du premier transistor de décharge à l'état non conducteur jusqu'à ce que le courant circulant dans le troisième commutateur à semi-conducteur augmente à la suite du calage du moteur électrique ou de la manoeuvre du premier commutateur de manoeuvre, et la quatrième impédance (39) relie la base du second transistor de décharge à la seconde borne du moteur électrique, la seconde et la quatrième impédance formant un circuit diviseur de tension assurant le maintien du second transistor de décharge à l'état non conducteur jusqu'à ce que le courant dans le quatrième commutateur à semi-conducteur augmente à la suite du calage du moteur électrique ou de la manoeuvre du second commuateur de manoeuvre.

2. Appareil selon la revendication 1, caractérisé en ce que le premier et le second commutateur à semi-conducteur (14, 15) sont des thyristors (redresseurs commandés au silicium SCR) et le premier et le second commutateur à semi-conducteur (17, 18) sont des transistors à effet de champ (FET), les thyristors et les transistors à effet de champ formant un circuit en pont, la troisième et la quatrième impédance (51, 39) reliant les cathodes du premier et du second thyristor aux bases du premier et du second transistor de décharge respectivement.

3. Appareil selon l'une des revendications 1 et 2, caractérisé en ce que le premier commutateur de manoeuvre (30) est relié, par une cinquième impédance (32) et un premier dispositif unidirectionnel (33, 34), à la "gâchette" du premier commutateur à semi-conducteur et à la "grille" du quatrième commutateur à semi-conducteur, et en ce que le second commutateur de manoeuvre (40) est relié, par une sixième impédance (43) et un second dispositif unidirectionnel (44, 45), à la "gâchette" du second commutateur à semi-conducteur et à la "grille" du troisième commutateur à semi-conducteur, le premier et le second commutateur de manoeuvre étant rappelés vers des premiers états dans lesquels les bornes de leur bras mobile sont en communication avec la seconde borne de la source (20), mais pouvant être manoeuvrés sélectivement afin qu'ils prennent des seconds états dans lesquels les bornes des bras mobiles sont en communication avec la première borne de la source.

WINDOW DRIVE MECHANISM

B+

0 186 282